# EUROPEAN PATENT APPLICATION

(11) **EP 1 043 233 A1**
(43) Date of publication of application: **11.10.2000**
(21) Application number: 99112760.6
(22) Date of filing: 01.07.1999
(51) Int. Cl.: B65B 43/52

(54) **Pouch filling and feeding apparatus and method thereof**

(30) Priority: 31.03.1999 JP 9040699
(71) Applicant: SEIKO CORPORATION, Shimizu 424 (JP)
(72) Inventor: Sugimoto, Nobuhiro, 424 Shimizu (JP); Muraoka, Hideaki, 424 Shimizu (JP); Yamada, Shigeyoshi, 424 Shimizu (JP); Ichien, Masayuki, 424 Shimizu (JP); Kasai, Hideki, 424 Shimizu (JP)
(74) Representative: Schwabe - Sandmair - Marx

(57) **Abstract**

A pouch filling and packing apparatus comprises an endless circulating transportation means (1) on which a multiplicity of holders (8) are placed to hold pouches (7), and a pouch supply means (2), a pouch insertion means (3), a fluid filling means (4), a pouch seal means (5), and a pouch take-out means (6) which are sequentially disposed on the holder transportation track of the circulating transportation means (1), and the timing at which the circulating transportation means (1) moves is synchronized with the timing at which the pouch supply means (2), the pouch insertion means (3), the fluid filling means (4), the pouch seal means (5), and the pouch take-out means (6) move. With this arrangement, the opening of a pouch whose shape holding property is bad can be reliably opened and the pouch can be smoothly and effectively filled with fluid.

## Description

### BACKGROUND OF THE INVENTION

### 1. Field of the Invention

The present invention relates to a pouch filling and packing apparatus and a method thereof capable of smoothly and effectively filling a pouch having a bad shape keeping property with liquid by reliably opening the opening of the pouch.

### 2. Description of the Related Art

Conventionally, when pouches having bad shape keeping and self-standing properties are to be filled with liquid and packed, the pouches must be opened largely so that a filler nozzle can be reliably inserted into the pouches. For this purpose, each of the pouches is previously swelled in other process and dropped into a pouch supporter and both the ears and the barrel of the pouch are held and supported by the pouch supporter.

The pouch dropped into the pouch supporter is transported to a next filling process. After the pouch is filled with liquid, the pouch is transported to other seal process where the pouch is sealed. Since processing is carried out by stopping the pouch accommodated in the pouch supporter in respective processes, there are problems that a jobs are executed intermittently, that a processing capability is greatly lowered and that a filling and packing process cannot be carried out at a high speed.

An object of the present invention, which was made to solve the above problem, is to provide a pouch filling and packing apparatus and a method thereof capable of reliably opening the opening of a pouch whose shape keeping property is bad and smoothly and effectively filling the pouch with fluid, in which the apparatus comprises an endless circulating transportation means on which a multiplicity of holders are placed to hold pouches, and a pouch supply means, a pouch insertion means, a fluid filling means, a pouch seal means, and a pouch take-out means which are sequentially disposed on the holder transportation track of the circulating transportation means, wherein the timing at which the circulating transportation means moves is synchronized with the timing at which the pouch supply means, the pouch insertion means, the fluid filling means, the pouch seal means, and the pouch take-out means move.

### SUMMARY OF THE INVENTION

To achieve the above object, the present invention is arranged such that a pouch filling and packing apparatus comprises an endless circulating transportation means on which a multiplicity of holders are placed to hold pouches, and a pouch supply means, a pouch insertion means, a fluid filling means, a pouch seal means, and a pouch take-out means which are sequentially disposed on the holder transportation track of the circulating transportation means, wherein the timing at which the circulating transportation means moves is synchronized with the timing at which the pouch supply means, the pouch insertion means, the fluid filling means, the pouch seal means, and the pouch take-out means move.

The pouch supply means includes a pouch accumulation body in which a multiplicity of the pouches each facing its opening upward are stoked in a folded state, an adsorption means for taking out one of the pouches from the pouch accumulation body, and an opening means for opening the opening of the pouch.

Each of the holders placed on the circulating transportation means includes a base, a pair of holding members standing on the base so as to open and close in the lateral width direction of the pouch, and an actuating means for opening and closing the pair of holding members.

In a pouch filling and packing method used in a pouch filling and packing apparatus which comprises an endless circulating transportation means on which a multiplicity of holders are placed to hold pouches, and a pouch supply means, a pouch insertion means, a fluid filling means, a pouch seal means, and a pouch take-out means which are sequentially disposed on the holder transportation track of the circulating transportation means, wherein the timing at which the circulating transportation means moves is synchronized with the timing at which the pouch supply means, the pouch insertion means, the fluid filling means, the pouch seal means, and the pouch take-out means move, the method is arranged such that the pouch insertion means takes out one of a multiplicity of the pouches stocked in a folded state through a take-out means, the pouch is located at a position above a pair of holding members, which are opened larger than the lateral width of the pouch, of a holder on the circulating transport device so as to correspond to the holding members, the holding members hold the pouch on the forward and backward sides thereof to thereby open the opening of the pouch, the pouch is pushed into the holder by an insertion means inserted thereinto from above the opening thereof, the pouch is held by the pair of holding members by closing them, the pouch is filled with fluid by the fluid filling device, the opening of the pouch is sealed, and then the pouch is taken out from the holder.

### BRIEF DESCRIPTION OF THE DRAWINGS

FIG. 1 is a schematic plan view showing the main portion of an embodiment of a pouch filling and packing apparatus which employs a pouch filling and packing method according to the present invention;
FIG. 2A and FIG. 2B are plan views schematically showing the respective devices of the apparatus of FIG. 1;
FIG. 3 is a view explaining the operation executed by the method of FIG. 1;
FIG. 4 is a perspective view showing a pouch used in the apparatus of FIG. 1;
FIG. 5 is a front elevational view in longitudinal cross section showing a holder of the apparatus of FIG. 1;
FIG. 6A and FIG. 6B are bottom views showing the operating state of the holder of FIG. 5, wherein FIG. 6A shows the holder when it is opened and FIG. 6B shows the holder when it is closed;

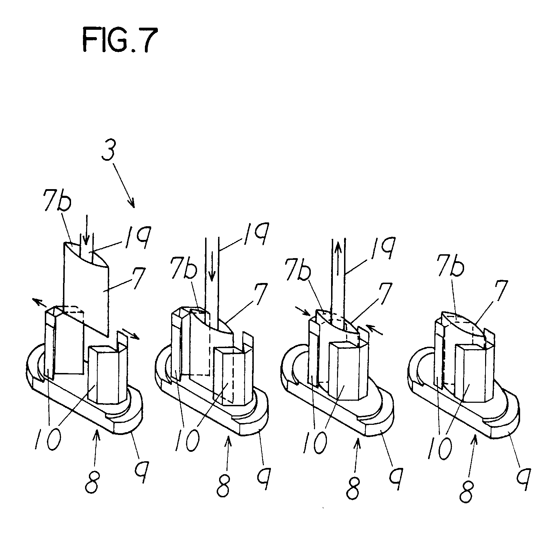

FIG. 7 is a perspective view showing the operating state of the holder of FIG. 5.

### DESCRIPTION OF THE PREFERRED EMBODIMENT

Next, an embodiment of a pouch filling and packing apparatus and a method thereof according to the present invention will be described with reference to the accompanying drawings.

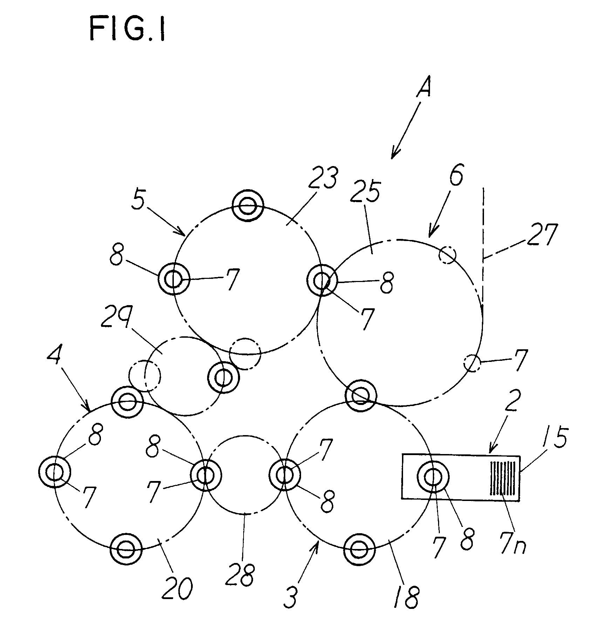

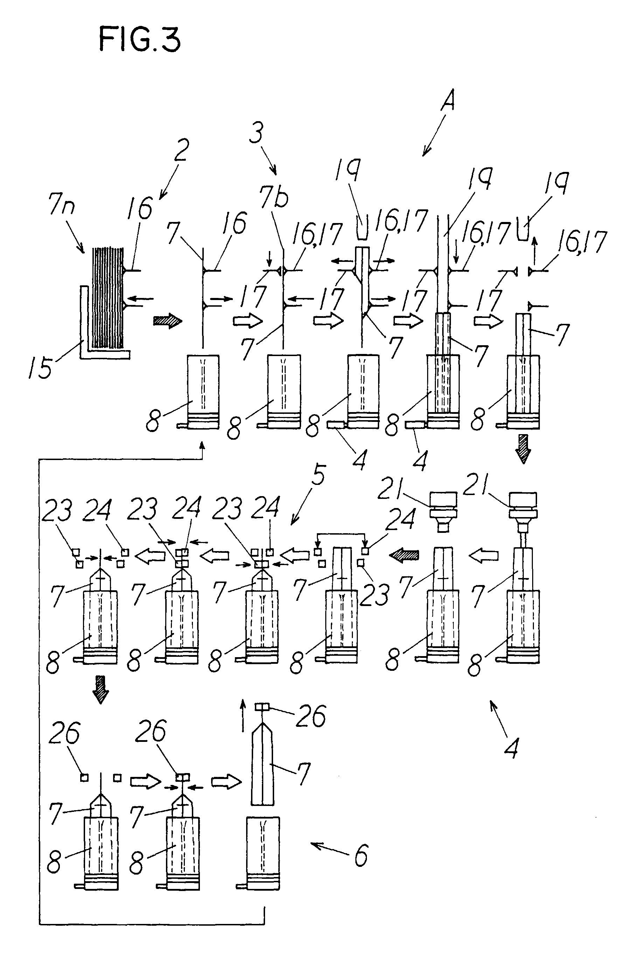

Symbol A in FIG. 1 and FIG. 3 denotes a pouch filling and packing apparatus employing the embodiment of the pouch filling and packing method of the present invention. The pouch filling and packing apparatus basically comprises a circulating transport device 1, a pouch supply device 2, a pouch insertion device 3, a fluid filling device 4, a pouch seal device 5 and a pouch take-out device 6.

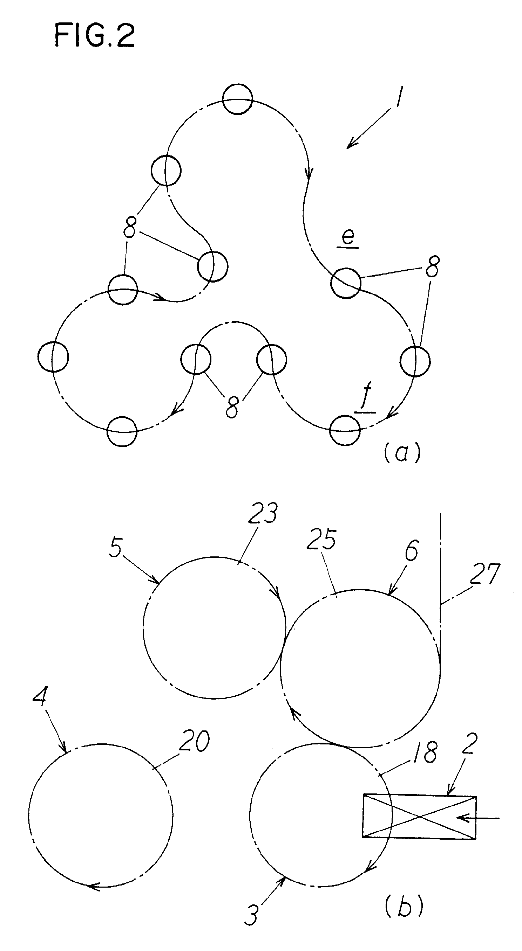

As shown in FIG. 2A, the circulating transport device 1 comprises a conveyer or the like, which is stretched in an endless state, and travels at a prescribed speed with a multiplicity of holders 8 placed thereon to hold pouches 7.

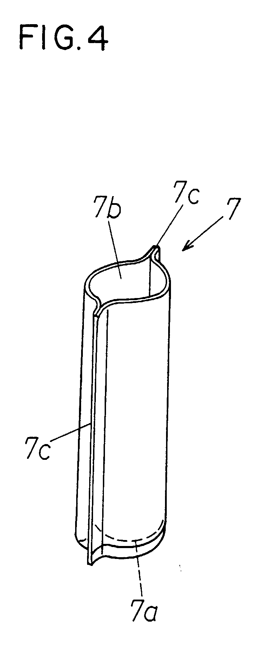

The pouch 7 is molded of a flexible soft material so as to constitute a bag having walls in three directions. More specifically, as shown in FIG. 4, the pouch 7 has a bottom 7a, on which it can stand by itself when the lower portion of it expands, and an opening 7b formed to the upper portion of it into which the filler nozzle of a fluid filling device 4 can be easily inserted.

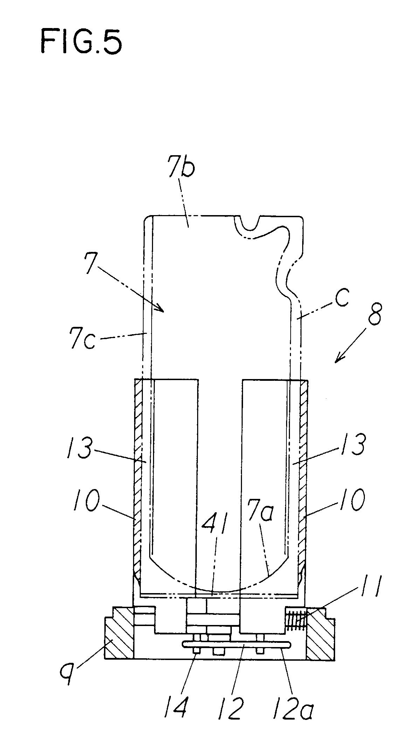

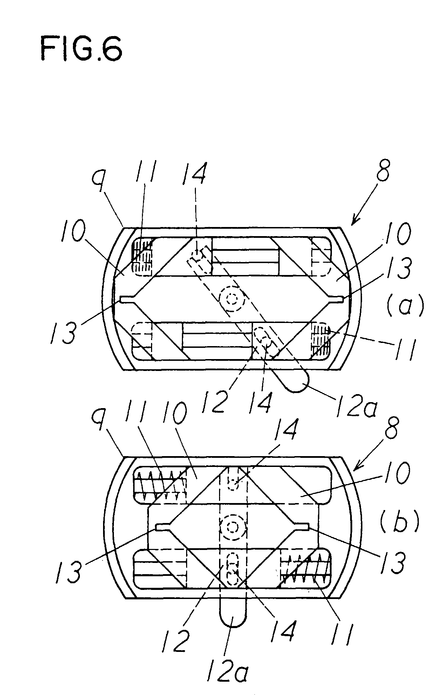

The holder 8 holds the pouch 7 in a desired attitude so that the pouch 7 is not inclined or fallen down while it is moved in processing steps. As shown in FIG. 5 and FIG. 6, the holder 8 comprises a base 9, a pair of holding members 10 and 10, which are attached to the base 9 so as to relatively advance to and retract from the base 9 and have surfaces formed to a ship-bottom-shape so as to be abutted against the pouch 7, an urging device 11 such as a spring or the like for urging the pair of holding members 10 and 10 in the holding direction of the pouch 7 in association with the holding members 10 and 10, and an actuating device 12 for relatively actuating the pair of holding members 10 and 10 in association with each other against the urging force of the urging device 11.

The pair of holding members 10 and 10 have ear inserting sections 13 and 13 into which both the ear potions 7c of the pouch 7 are inserted, and the ship-bottom-shaped sections of the holding members 10 and 10 are abutted against the barrel portion of the pouch 7.

The interval between the pair of holding members 10 and 10 when they are closed can be arbitrarily set by an interval adjusting member 41 to be interposed therebetween which has a plurality of sizes (refer to FIG. 5). The interval adjusting member 41 may be suitably selected depending upon the shape and type of the pouch 7 and removably disposed in the holding members 10 and 10.

The actuating device 12 opens and closes the pair of holding members 10 and 10. More specifically, when the actuating device 12 is engaged with shafts 14 and 14 disposed to the lower portions of the pair of holding members 10 and 10 and thus the extreme end 12a of the actuating device 12 is engaged with the an abutting element 40 provided with the circulating transport device 1 (refer to FIG. 3), the actuating device 12 opens the holding members 10 and 10 in the section e to f, whereas when the extreme end 12a is removed from the abutting element 40, the actuating device 12 closes the holding members 10 and 10 in the section f to e as shown in FIG. 1.

As shown in FIG. 3, the pouch supply device 2 comprises a pouch group accumulation body 15 for accumulating a pouch group 7n which includes a multiplicity of the pouches 7 each facing its opening 7b upward in the state that they are folded in a longitudinal direction, an advancing and retracting adsorption unit 16 for taking out one of the pouches 7 from the pouch group accumulation unit 15, and advancing and retracting opening units 17 for opening the opening 7b of the pouch 7.

The adsorption unit 16 and the opening units 17 of the pouch supply device 2 are disposed to a rotary body 18 a part of which is approximately located on the transportation track of the holder 8 in the circulating transport device 1 and moved so as to travel at the same timing as the circulating transport device 1.

The pouch insertion device 3 delivers the pouch 7 supported by the adsorption unit 16 and the opening units 17 to the holder 8 on the circulating transport device 1. More specifically, an insertion rod 19 which is attached to the pouch insertion device 3 so as to advance to and retract from the rotary body 18 comes into the opening 7b of the pouch 7 and is further pushed thereinto so that the pouch 7 is pushed into the holder 8 of the circulating transport device 1 which travels in synchronism with the pouch insertion device 3.

The fluid filling device 4 fills the pouch pushed into the holder 8 with fluid by locating a filler nozzle 21 attached to a rotary body 20 at a position corresponding to the opening 7b of the pouch 7. The fluid filling device 4 is moved so as to travel at the same timing as the circulating transport device 1.

The pouch seal device 5 seals the opening 7b of the pouch 7 which is filled with the fluid using an ordinary heat sealer 24 which is mounted on a rotary body 22 and has a mouth presser 23 for pressing the mouth of the pouch 7. The pouch seal device 5 is moved so as to travel at the same timing as the circulating transport device 1.

The pouch take-out device 6 takes out the pouch 7, which has been filled with the fluid and packed, from the circulating transport device 1. More specifically, the pouch take-out device 6 grips the pouch 7 through a pouch gripper 26 attached to a rotary body 25 and supplies it to a transportation device 27 such as a conveyer or the like. The sealed portion of the pouch 7, which has been sealed by the pouch seal device 5, is molded and cooled by being pressed with the gripper 26. The pouch take-out device 6 is moved so as to travel at the same timing as the circulating transport device 1.

Accordingly, the pouch filling and packing apparatus A and the method of it according to the embodiment of the present invention achieves the following operation/working effect which will be described with reference to FIG. 3 schematically describing the operation of them.

The circulating transport device 1 has a multiplicity of the holders 8 placed thereon at prescribed intervals and continuously circulates and travels in one direction at a prescribed speed.

First, the pouch supply device 2 receives one of the pouches 7 from the foremost line of the pouch group 7n through the adsorption unit 16. The pouch supply device 2 is moved in synchronism with the circulating transport device 1.

The opening 7b of the pouch 7 is widened with the opening units 17 and 17 which are located in correspondence with both the sides of the pouch 7 (the adsorption unit 16 also serves as one of the opening units on one of the sides).

In this state, the pouch 7 is inserted into a holder 8 on the circulating transport device 1 in such a manner that the insertion rod 19 of the pouch insertion device 3, which moves in synchronism with the circulating transport device 1, is inserted into the opening 7b of the pouch 7 so that the pouch 7 is pushed into the holder 8.

As shown in FIG. 2A, the pair of holding members 10 and 10 of the holder 8 are held in the state that they are opened wider than the lateral width of the pouch 7 in the section e to f by the engagement of the extreme end 12a of the actuating device 12 with the abutting element 40.

With this operation, the pouch 7 can be easily accommodated inwardly of the holding members 10 and 10 as well as both the ear potions 7c of the pouch 7 correspond to the ear inserting sections 13 and 13.

When the extreme end 12a of the holder 8 is removed from the abutting element 40 (from the position of e), the pair of holding members 10 and 10 are closed by the urging device 11 and the pouch 7 is held by the holder 8 in such a degree that it is not easily inclined or fallen down.

Next, the pouch 7 is moved from the pouch insertion device 3 to the fluid filling device 4 through an interconnecting member 28. Then, the pouch 7 is filled with a proper amount of the fluid through the filler nozzle 21 of the fluid filling device 4 which is moved in synchronism with the circulating transport device 1 while the rotary body 20 rotates.

One the completion of the filling operation, the pouch 7 is moved from the fluid filling device 4 to the pouch seal device 5 through an interconnecting member 29. More specifically, the opening 7b of the pouch 7 is sealed with the heat sealer 24 of the pouch seal device 5, which is moved in synchronism with the circulating transport device 1, in the state that the pouch 7 is held with the mouth presser 23 so that no wrinkles are caused to the mouth of the pouch.

The pouch 7 as a product accommodated in the holder 8 which has been transported to the pouch take-out device 6 is reached to the abutting element 40 (section e to f) by the rotational movement of the rotary body 25, the actuating device 12 is operated by the urging force of the urging device 11, and the pair of holding members 10 and 10 of the holder 8 is opened.

As a result, preparation for taking out the pouch 7 is finished. The pouch 7 is removed from the holder 8 by the upward movement of the gripper 26 and transferred to the transportation device 27 by the rotational movement of the rotary body 25, whereby an entire process is finished.

As described above, the pouches 7 are continuously supplied from the pouch supply device 2 into the respective holders 8 which circulate and travel on the circulating transport device 1 and sequentially subjected to the respective processing steps as the circulating transport device 1 travels as described above.

The present invention arranged as described above can reliably open the opening of a pouch whose shape keeping property is bad and smoothly and effectively fill the pouch with fluid. Moreover, in the present invention, the processing steps are sequentially carried out in series in the respective processes as the circulating transport device 1 travels, whereby the respective processing jobs can be continuously executed. As a result, the present invention can achieve a specific effect that a processing capability can be greatly improved as well as a filling and packing operation can be carried out at a high speed.

## Claims

1. A pouch filling and packing apparatus, characterized by comprising an endless circulating transportation means (1) on which a multiplicity of holders (8) are placed to hold pouches (7), and a pouch supply means (2), a pouch insertion means (3), a fluid filling means (4), a pouch seal means (5), and a pouch take-out means (6) which are sequentially disposed on the holder transportation track of the circulating transportation means (1), wherein the timing at which the circulating transportation means (1) moves is synchronized with the timing at which the pouch supply means (2), the pouch insertion means (3), the fluid filling means (4), the pouch seal means (5), and the pouch take-out means (6) move.

2. A pouch filling and packing apparatus according to claim 1, wherein the pouch supply means (2) includes a pouch accumulation body (15) in which a multiplicity of the pouches (7) each facing its opening upward are stoked in a folded state, an adsorption means (16) for taking out one of the pouches (7) from the pouch accumulation body (15), and an opening means (17) for opening the opening of the pouch (7).

3. A pouch filling and packing apparatus according to claim 1, wherein each of the holders placed on the circulating transportation means includes a base, a pair of holding members (10, 10) standing on the base so as to open and close in the lateral width direction of the pouch, and an actuating means for opening and closing the pair of holding members (10 and 10).

4. A pouch filling and packing method used in a pouch filling and packing apparatus which comprises an endless circulating transportation means (1) on which a multiplicity of holders (8) are placed to hold pouches (7), and a pouch supply means (2), a pouch insertion means (3), a fluid filling means (4), a pouch seal means (5), and a pouch take-out means (6) which are sequentially disposed on the holder transportation track of the circulating transportation means (1), wherein the timing at which the circulating transportation means (1) moves is synchronized with the timing at which the pouch supply means (2), the pouch insertion means (3), the fluid filling means (4), the pouch seal means (5), and the pouch take-out means (6) move, the method characterized in that the pouch insertion means (3) takes out one of a multiplicity of the pouches (7) stocked in a folded state through a take-out means, the pouch (7) is located at a position above a pair of holding members (10 and 10), which are opened larger than the lateral width of the pouch (7), of a holder (8) on the circulating transport device (1) so as to correspond to the holding members (10 and 10), the holding members (10 and 10) hold the pouch (7) on the forward and backward sides thereof to thereby open the opening of the pouch (7), the pouch (7) is pushed into the holder (8) by an insertion means (19) inserted thereinto from above the opening thereof, the pouch (7) is held by the pair of holding members (10 and 10) by closing them, the pouch (7) is filled with fluid by the fluid filling device (4), the opening of the pouch (7) is sealed, and then the pouch (7) is taken out from the holder (8).
